Europäisches Patentamt

European Patent Office

Office européen des brevets

(19)

(11) Veröffentlichungsnummer : **0 237 615**
**B1**

(12) # EUROPÄISCHE PATENTSCHRIFT

(45) Veröffentlichungstag der Patentschrift :
23.11.89

(21) Anmeldenummer : 86112995.5

(22) Anmeldetag : 20.09.86

(51) Int. Cl.⁴ : **B 27 B  5/06**, B 27 C  3/00,
B 27 C  9/04

---

(54) Säge- und Bohrmaschine zum Aufteilen und Bohren plattenförmiger Werkstücke.

---

(30) Priorität : 20.03.86 DE 3609331

(43) Veröffentlichungstag der Anmeldung :
23.09.87 Patentblatt 87/39

(45) Bekanntmachung des Hinweises auf die Patenterteilung : 23.11.89 Patentblatt 89/47

(84) Benannte Vertragsstaaten :
AT FR GB IT

(56) Entgegenhaltungen :
DE–A– 2 722 073
DE–A– 3 110 860

(73) Patentinhaber : Jenkner, Erwin
Lindenstrasse 13
D-7261 Gechingen-Bergwald (DE)

(72) Erfinder : Jenkner, Erwin
Lindenstrasse 13
D-7261 Gechingen-Bergwald (DE)

(74) Vertreter : Becker, Maria, Dipl.-Phys.
Auf dem Haigst 29
D-7000 Stuttgart 70 (DE)

## Beschreibung

Die Erfindung betrifft eine Säge- und Bohrmaschine zum Aufteilen und Bohren plattenförmiger Werkstücke, mit einem einen Sägeschlitz aufweisenden Maschinentisch und unterhalb desselben längs einer Geradführung verfahrbarem Sägewagen nebst einer mittels einer Antriebsvorrichtung parallel zur Schnittebene über die gesamte Schnittläge verstellbaren und feststellbaren Bohrvorrichtung zum flach- und/oder stirnseitigen Bohren.

Eine Säge- und Bohrmaschine dieser Art wurde bereits durch die am 18.6.86 veröffentlichte EP-A-0 184 642 (DE-OS 35 22 278) vorgeschlagen.

Sie ermöglicht es, auf vollautomatischem Wege Rohplatten in eine Vielzahl von Einzelformaten (Plattenteilstücke) mit ggf. unterschiedlichen Abmessungen aufzuteilen und in diese flach- und/oder stirnseitig in beliebig vorwählbarer Anzahl und Position Konstruktionsbohrungen einzubringen.

Damit lassen sich zum einen aus einer Rohplatte beispielsweise sämtliche, für den Aufbau eines Möbelkorpus erforderlichen Korpuselemente vollautomatisch auf Maß zuschneiden und mit allen für Fixierungs- und Haltestifte erforderlichen Bohrungen ausstatten. Zum anderen können nacheinander Elemente für Möbelkorpi unterschiedlicher Grösse bzw. Abmessung angefertigt werden, ohne dass hierzu von Hand durchzuführende Einstellungen von Maschinenaggregaten notwendig sind.

Bei dieser Säge- und Bohrmaschine sind Sägewagen und Bohrvorrichtung jeweils für sich unterhalb des Maschinentisches entlang von nebeneinander angeordneten Geradführungen horizontal verstellbar geführt, wobei beide Aggregate voneinander getrennt anzutreiben und zu steuern sind.

Aufgabe der vorliegenden Erfindung ist es, eine Säge- und Bohrmaschine mit den gattungsbestimmenden Merkmalen anzugeben, die sich durch einen geringeren konstruktiven Aufwand und einfacheren Aufbau auszeichnet.

Diese Aufgabe wird erfindungsgemäss dadurch gelöst, dass die Bohrvorrichtung entlang der Geradführung des Sägewagens und mit diesem gemeinsam verstellbar ist und dass die Breite des Sägeschlitzes zum Bohren vergrösserbar ist.

Die erfindungsgemässe Konstruktion erfordert somit für Sägewagen und Bohrvorrichtung lediglich noch eine gemeinsame Führungsvorrichtung und einen gemeinsamen Antrieb, der vorteilhaft in den Sägewagen integriert ist.

Zum Bohren ist der Sägeschlitz entsprechend zu verbreitern, damit die Bohrspindeln zum flach- und/oder stirnseitigen Bohren von unten nach oben ihre Vorschub- und Einstellbewegung ausführen können.

Sägewagen und Bohrvorrichtung können eine Baueinheit bilden, wobei die Bohrvorrichtung als Ganzes beispielsweise an einem Stirnende oder Teile der Bohrvorrichtung im Bereich beider Stirnenden des Sägewagens vorgesehen sein können.

Eine weitere vorteilhafte Konstruktionsvariante kann darin bestehen, die Bohrvorrichtung als eine vom Sägewagen abkoppelbare Baueinheit vorzusehen. Diese Ausführungsform bietet den Vorteil, die zu bewegenden Massen beim Aufteilen von Rohplatten entsprechend klein zu halten.

Zur Verbreiterung des Sägeschlitzes für den Einsatz der Bohrvorrichtung kann der Maschinentisch beispielsweise ein abklappbares Teilstück aufweisen. Bei einer anderen Konstruktion ist hierzu die eine Kante des Sägeschlitzes durch ein Tischplattenzwischenstück gebildet, das quer zur Schlitzlängsrichtung verschiebbar und feststellbar ist. Eine bevorzugte Ausführungsform sieht vor, den Maschinentisch in der Ebene des Sägeschlitzes geteilt auszubilden und einen der beiden Tischteile quer zur Schnittrichtung verstellbar und feststellbar auszubilden.

In der Zeichnung ist ein Ausführungsbeispiel einer erfindungsgemässen Säge- und Bohrmaschine schematisch dargestellt. Es zeigen :

Fig. 1 eine Maschinenseitenansicht, wobei die Maschine zum Plattenaufteilen eingerichtet ist ;

Fig. 2 eine Darstellung ähnlich Fig. 1, wobei die Maschine zum Bohren von Werkstückplatten eingerichtet ist ;

Fig. 3 eine Maschinendraufsicht, wobei die untere Maschinenhälfte zum Sägen und die obere Maschinenhälfte zum Bohren eingerichtet ist ;

Fig. 4 eine Ansicht der Maschine in Richtung des Pfeiles A der Fig. 3 gesehen, wobei sich der mit der Bohrvorrichtung zu einem einzigen Bearbeitungsaggregat zusammengefasste Sägewagen in einer seitlichen Ausgangsstellung befindet und beide Sägeblätter in Sägestellung ausgetaucht sind ;

Fig. 5 eine Draufsicht des Bearbeitungsaggregates der Fig. 4 ;

Fig. 6 eine Vorderansicht einer aus Sägewagen und Bohrvorrichtung gebildeten Bearbeitungseinheit, wobei die Bohrvorrichtung vom Sägewagen abkoppelbar ist.

Die in der Zeichnung gezeigte Säge- und Bohrmaschine gliedert sich in eine Plattenaufteilsäge 10 sowie eine Werkstückvorschubvorrichtung 12, die in ihrer Ausführung bekannt und mit der Plattenaufteilsäge 10 verkettet ist. Letztere besitzt einen Werkstückauflagetisch 14 mit einer auf diesem angeordneten Werkstückspannvorrichtung 16, die beispielsweise einen vertikal beweglichen und pneumatisch betätigbaren Durckbalken 18 zum Spannen aufzuteilender und zu bohrender Werkstückplatten auf dem Werstückauflagetisch 14 aufweist. Dieser Druckbalken befindet sich oberhalb eines sich quer zur Vorschubrichtung der Werkstückvorschubvorrichtung 12 erstreckenden, im Werkstückauflagetisch 14 vorgesehenen Sägeschlitzes 20.

Unterhalb des Sägeschlitzes 20 ist entlang einer Geradführung 22 ein als Ganzes mit 24 bezeichnetes Bearbeitungsaggregat verstellbar und feststellbar geführt. Dieses setzt sich aus einem Sägewagen 26 und einer Bohrvorrichtung 28 zusammen, die beide zu einer Baueinheit zusammengefasst sind. Der Sägewagen 26 ist in üblicher Weise mit einem Vorritzblatt 30 und einem Sägeblatt 32 ausgestattet, die gemeinsam im Sägewagen ein- und austauchbar gelagert sind. Ein Elektromotor 34 dient zu deren Antrieb, während ein Elektromotor 36 für den Transport des Bearbeitungsaggregates 24 längs der Geradführung 22 und zur Positionierung desselben in vorwählbaren Stellungen dient.

Die Bohrvorrichtung 28 ist in den Sägewagen 26 integriert und weist beispielsweise zwei Mehrspindelbohrköpfe 38 und 40 auf, die jeweils eine Reihe vertikaler Bohrspindeln 42 bzw. 44 besitzen. Mit Hilfe dieser Bohrspindeln lassen sich in die Unterseite plattenförmiger Werkstücke bzw. an Plattenzuschnitten Flächenbohrungen einbringen, wozu die Bohrköpfe oder die Bohrspindeln in vertikaler Richtung nach oben zu steuern sind. Dies kann beispielsweise pneumatisch erfolgen.

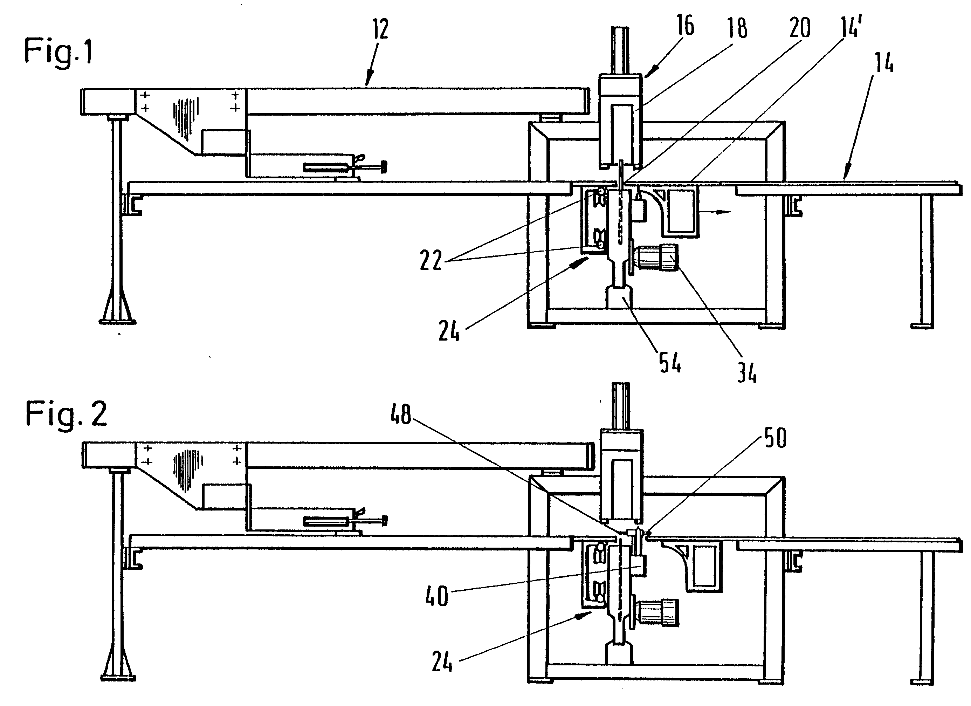

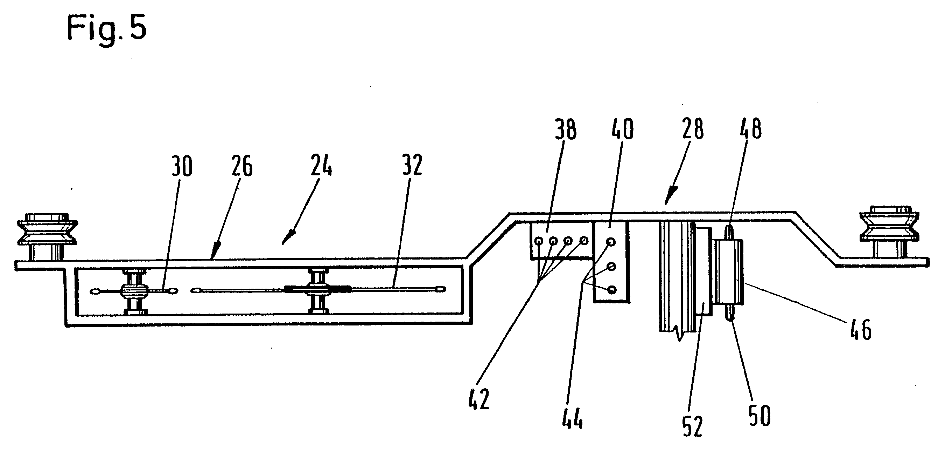

Ein weiterer Bohrkopf ist mit 46 bezeichnet. Er dient zur Herstellung von Bohrungen in Stirnkanten von Werkstücken. Hierzu ist der Bohrkopf mit zwei vorzugsweise koaxial zu einander angeordneten Bohrspindeln 48 und 50 ausgestattet, die horizontal gelagert sind. Beide Bohrspindeln sind vorteilhaft gemeinsam oder getrennt in gleicher oder gegenläufiger Drehrichtung antreibbar. Der Bohrkopf 46 ist in geeigneter Weise an einem Trägerschlitten 52 sowohl senkrecht zur Zeichenebene der Fig. 5 als auch in zueinander senkrechten Richtungen in dieser Zeichenebene und dabei quer zur Längserstreckung des Sägeschlitzes 20 verstellbar vorgesehen, so dass der Bohrkopf zum Aufbohren von Werkstückstirnkanten, wie aus Fig. 2 zu ersehen ist, nach oben in eine Bearbeitungsstellung steuerbar und danach in Achsrichtung der Spindeln 48, 50 zur Durchführung des Bohrvorschubes hin- und herbewegbar ist.

Wird der Bohrkopf 46 nicht benötigt, vermag dieser in eine Stellung unterhalb des Werkstückauflagetisches 14 abzutauchen.

Die Bohrvorrichtung könnte ferner noch mit einer nicht gezeigten Montagevorrichtung ausgestattet sein, mit deren Hilfe sich beispielsweise Beschlagteile selbsttätig in Flächenbohrungen einpressen lassen. Selbstverständlich könnten auch mehrere solcher Montagevorrichtungen und ggf. noch weitere Bohrköpfe vorgesehen sein.

Für den Einsatz der Bohrvorrichtung 28 ist es notwendig, die Breite des Sägeschlitzes 20 zu vergrössern. Zu diesem Zweck weist der Werkstückauflagetisch 14 z. B. ein Tischplattenzwischenstück 14' auf, das aus seiner in Fig. 1 gezeigten Abdecklage, in der es die Bohrvorrichtung 28 abdeckt, gemäss Fig. 2 in eine Freigabestellung nach rechts verschiebbar ist, so dass die in den Bohrspindeln sitzenden Bohrwerkzeuge aus der Werkstückauflageebene austauchen können.

Sollen beispielsweise Rohplatten lediglich aufgeteilt werden, so ist das Tischplattenzwischenstück 14' in seiner Abdecklage gemäss Fig. 1 zu belassen und das Berabeitungsaggregat 24 über die gesamte Schnittlänge hin und her zu steuern, wobei in der einen Bewegungsrichtung Vorritz- und Sägeblatt 30, 32 in ihre Bearbeitungsstellung ausgefahren und in der anderen Bewegungsrichtung eingefahren sind. Die dabei anfallenden Späne werden über einen Absaugkanal 54 abgesaugt. Dabei läuft die Bohrvorrichtung 28 funktionslos mit.

Sind Werkstückrohplatten aufzuteilen und die dabei anfallenden formatierten Werkstückplatten auch noch flach- und/oder stirnseitig aufzubohren, so ist das Bearbeitungsaggregat 24 programmgesteuert in eine oder mehrere vorbestimmte Bearbeitungsstellungen einzustellen, wonach vorzugsweise selbsttätig das Tischplattenzwischenstück 14' in seine Freigabeposition verstellt und anschliessend die Werkzeuge der Bohrvorrichtung 28 in Funktion gebracht werden.

Anstelle der aus Sägewagen 26 und Bohrvorrichtung 28 gebildeten Baueinheit kann das Bearbeitungsaggregat 24 auch durch zwei voneinander abkoppelbare Bearbeitungseinheiten gebildet sein, so dass der Sägewagen 26, sofern beispielsweise Rohplatten lediglich aufgeteilt werden sollen, allein zum Einsatz gebracht werden kann. In diesem Falle bildet auch die Bohrvorrichtung 28 gemäss Fig. 6 einen mittels Laufrollen 56 entlang der Geradführung 22 geführten Wagen, der mittels einer Kupplung 58 an den Sägewagen 26 ankoppelbar ist, sofern von einer Rohplatte anfallende Einzelwerkstücke zugleich auch noch entsprechend gebohrt werden sollen.

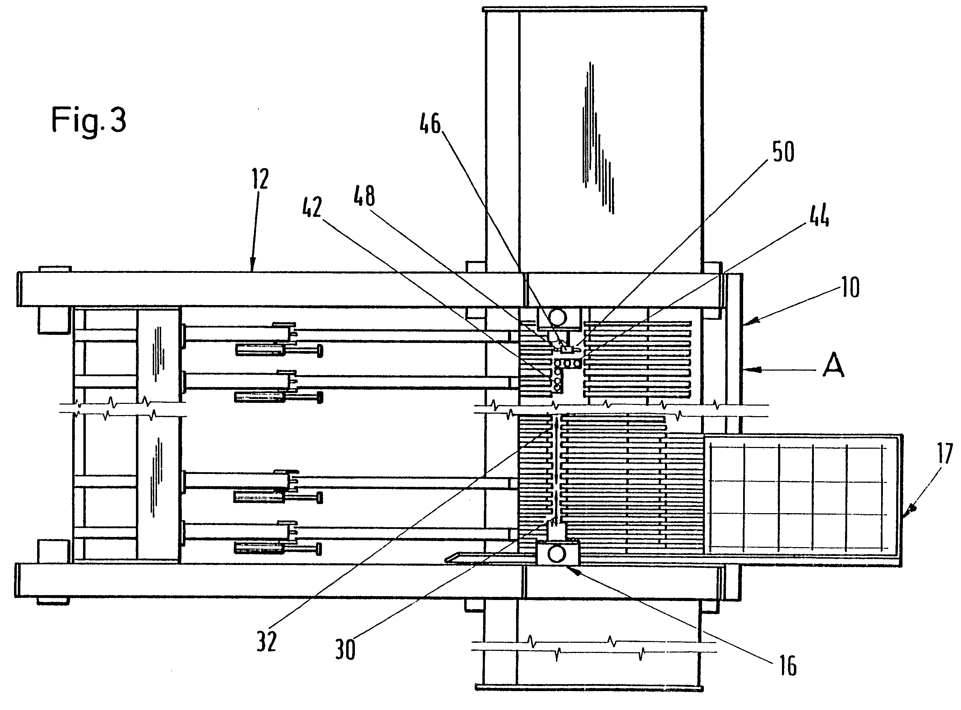

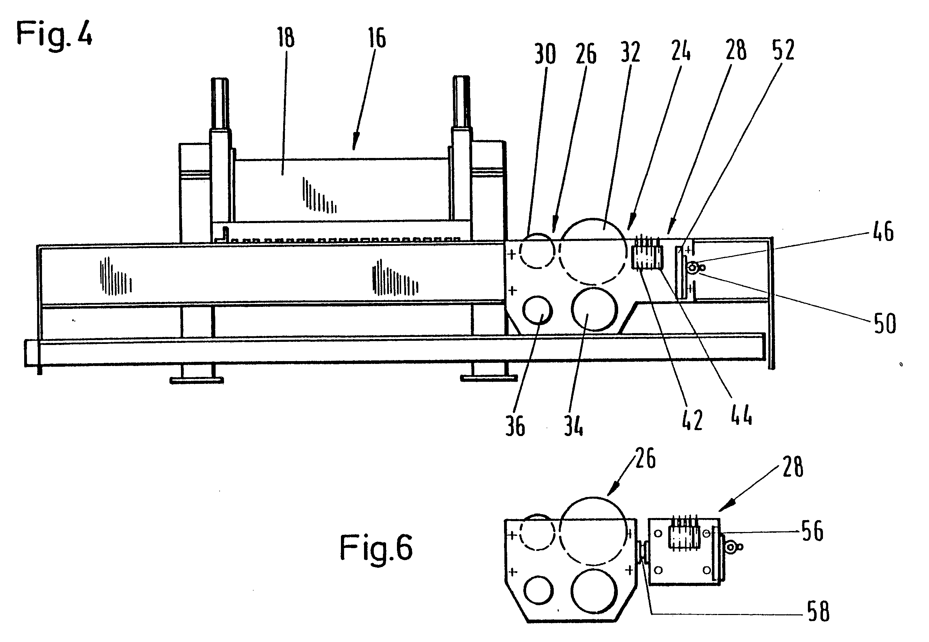

Wie aus den Fig. 3 und 4 zu ersehen ist, ist die Länge der Geradführung 22 derart ausgelegt, dass die Bohrvorrichtung 28 im Bereich der Gesamtbreite des Werkstückauflagetisches 14 an jeder gewünschten Stelle zur Durchführung von Bohr- und ggf. Montageoperationen positioniert werden kann.

Auf die Arbeitsweise der Werkstückvorschubvorrichtung 12 wird an dieser Stelle nicht weiter eingegangen, da diese bekannt ist.

## Patentansprüche

1. Säge- und Bohrmaschine zum Aufteilen und Bohren plattenförmiger Werkstücke, mit einem einen Sägeschlitz (20) aufweisenden Maschinentisch (14) und unterhalb desselben längs einer Geradführung (22) verfahrbarem Sägewagen (26) nebst einer mittels einer Antriebsvorrichtung parallel zur Schnittebene über die gesamte Schnittlänge verstellbaren und feststellbaren Bohrvorrichtung (28) zum flach- und/oder stirnseitigen Bohren, wobei die Bohrvorrichtung (28) entlang der Geradführung (22) des Sägewagens (26) und mit diesem gemeinsam verstellbar ist und dass die Breite des Sägeschlitzes (20) zum Bohren vergrösserbar ist.

2. Säge- und Bohrmaschine nach Anspruch 1, dadurch gekennzeichnet, dass Sägewagen (26) und Bohrvorrichtung (28) eine Baueinheit bilden.

3. Säge- und Bohrmaschine nach Anspruch 1, dadurch gekennzeichnet, dass die Bohrvorrichtung (28) eine vom Sägewagen (26) mitschlepp- und abkoppelbare Baueinheit bildet.

4. Säge- und Bohrmaschine nach einem der vorhergehenden Ansprüche, dadurch gekennzeichnet, dass Teile der Bohrvorrichtung (28) an beiden Stirnenden des Sägewagens (26) vorgesehen sind.

5. Säge- und Bohrmaschine nach einem der vorhergehenden Ansprüche, dadurch gekennzeichnet, dass die eine Kante des Sägeschlitzes (20) durch ein Tischplattenzwischenstück (14') gebildet ist, das quer zur Schlitzlängsrichtung verschiebbar und feststellbar angeordnet ist.

6. Säge- und Bohrmaschine nach einem der vorhergehenden Ansprüche 1-4, dadurch gekennzeichnet, dass der Maschinentisch (14) in der Ebene des Sägeschlitzes (20) geteilt und eines der beiden Tischteile quer zur Schnittrichtung verstellbar und feststellbar ist.

## Claims

1. Sawing and drilling machine for dividing and drilling workpieces in the shape of a plate, comprising a machine table (14) with a saw slit (20), a saw carriage (26) displaceable along a straight-line guide (22) below the machine table, and a drilling device (28) for planar face and/or end face drilling which is adjustable and immobilizable by a drive device parallel to the cutting plane throughout the entire length of cut, the drilling device (28) being adjustable along the straight-line guide (22) of the saw carriage (26) and jointly with the saw carriage, and the width of the saw slit (20) being enlargeable for drilling.

2. Sawing and drilling machine as defined in claim 1, characterised in that the saw carriage (26) and the drilling device (28) form one structural unit.

3. Sawing and drilling machine as defined in claim 1, characterised in that the drilling device (28) constitutes a structural unit which can be carried along by and uncoupled from the saw carriage (26).

4. Sawing and drilling machine as defined in one of the preceding claims, characterised in that parts of the drilling device (28) are provided on both end faces of the saw carriage (26).

5. Sawing and drilling machine as defined in one of the preceding claims, characterised in that one edge of the saw slit (20) is formed by an intermediate table section (14') which is displaceable and fixable transversely to the longitudinal direction of the slit.

6. Sawing and drilling machine as defined in one of the preceding claims 1 to 4, characterised in that the machine table (14) is divided in the plane of the saw slit (20) and one of the two table sections is adjustable and immobilizable transversely to the cutting direction.

## Revendications

1. Scie et foreuse mécaniques pour tronçonner et forer des pièces en forme de plaques, comportant une table de machine (14) présentant une rainure de sciage (20) et, en dessous de cette dernière, un chariot de sciage (26) pouvant se déplacer le long d'un guide droit (22), conjointement avec un dispositif de foration (28) pouvant être déplacé, au moyen d'un dispositif d'entraînement, sur toute la longueur de coupe, parallèlement au plan de coupe et pouvant être immobilisé, pour forer à plat ou frontalement, le dispositif de foration (28) étant déplaçable le long du guide droit (22) du chariot de sciage (26) et en même temps que lui, et la largeur de la rainure de sciage (20) pouvant être augmentée pour la foration.

2. Scie et foreuse mécaniques suivant la revendication 1, caractérisées en ce que chariot de sciage (26) et dispositif de foration (28) forment une unité de construction.

3. Scie et foreuse mécaniques suivant la revendication 1, caractérisées en ce que le dispositif de foration (28) forme une unité de construction qui peut être remorquée avec le chariot de sciage (26) et en être découplée.

4. Scie et foreuse mécaniques suivant l'une quelconque des revendications précédentes, caractérisées en ce que des parties du dispositif de foration (28) sont prévues aux deux extrémités frontales du chariot de sciage (26).

5. Scie et foreuse mécaniques suivant l'une quelconque des revendications précédentes, caractérisées en ce que l'une des arêtes de la rainure de sciage (20) est réalisée par une pièce intercalaire (14') du plateau de la table, pièce qui est disposée de façon à pouvoir être déplacée perpendiculairement à la direction de la rainure de sciage et être immobilisée.

6. Scie et foreuse mécaniques suivant l'une quelconque des précédentes revendications 1 à 4, caractérisées en ce que la table de machine (14) est partagée dans le plan de la rainure de sciage (20) et que l'une des deux parties de la table peut être déplacée perpendiculairement à la direction de coupe et être immobilisée.

Fig.1

Fig.2

Fig. 3

Fig.4

Fig.6

EP 0 237 615 B1

Fig. 5

30  26  24  32          38  40  28  48

42  44  52  50

46